Europäisches Patentamt

European Patent Office

Office européen des brevets

(11) Numéro de publication: **0 319 371 B1**

(12) **FASCICULE DE BREVET EUROPEEN**

(45) Date de publication de fascicule du brevet: **30.12.92** (51) Int. Cl.5: **F02M 61/12**, F02M 59/46

(21) Numéro de dépôt: **88402922.4**

(22) Date de dépôt: **22.11.88**

(54) **Dispositif de guidage cylindrique à compensation de jeu de fonctionnement pour système d'injection de combustible.**

(30) Priorité: **04.12.87 FR 8716859**

(43) Date de publication de la demande:
**07.06.89 Bulletin 89/23**

(45) Mention de la délivrance du brevet:
**30.12.92 Bulletin 92/53**

(84) Etats contractants désignés:
**DE FR GB IT**

(56) Documents cités:
**DE-A- 2 920 702**
**FR-A- 886 831**
**FR-A- 2 190 167**

(73) Titulaire: **RENAULT VEHICULES INDUSTRIELS Société Anonyme dite:**
**129 rue Servient "La Part Dieu"**
**F-69003 Lyon(FR)**

(72) Inventeur: **Miettaux, Marc**
**18, avenue des Platanes**
**F-69150 Decines(FR)**

(74) Mandataire: **Saint Martin, René**
**Régie Nationale des Usines Renault 8 & 10, avenue Emile Zola**
**F-92109 Boulogne Billancourt(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention se rapporte à un perfectionnement aux dispositifs de commande de débit incorporés à un système d'injection de combustible.

La description se fera à propos d'un porte-injecteur habituellement placé sur la culasse d'un moteur à combustion sans que cela restreigne son champ d'application. En effet, celui-ci peut s'étendre à tout organe de commande de débit de combustible ou de fluide de pilotage, cet organe pouvant être fixé sur une pompe ou une tuyauterie ou un bloc hydraulique de régulation ou sur un porte-injecteur.

On connaît des systèmes d'injection où un organe électromagnétique permet de commander avec précision, par déplacement d'un tiroir ou d'un clapet ou d'un pointeau, la quantité de combustible introduite dans la chambre de combustion d'un moteur.

Le brevet français 69.36.516 par exemple décrit un tel organe de commande constitué principalement d'un pointeau, mû à l'aide d'un actionneur électromagnétique, se déplaçant dans une buse. A peu près mi-hauteur de la zone de guidage dudit pointeau est ménagée une gorge annulaire, elle-même en relation avec un circuit de liquide sous pression, celui-ci communiquant avec l'intérieur du pointeau, le circuit comportant deux sièges d'étanchéité alternativement ouverts ou fermés, selon la commande électromagnétique procurant ainsi la fonction de commande de débit, le sus désigné pointeau limitant les fuites de liquide sous pression, présent dans la gorge annulaire, vers le circuit basse pression grâce à son ajustement très précis dans la buse ; la valeur du débit de fuite dépendant de la différence de pression régnant entre les circuits haute pression et basse pression, de l'espace entre le pointeau et la buse (jeu), du diamètre du pointeau et de la longueur de ses portées, du genre de fluide et de sa température.

Il est connu que dans ces systèmes une part des fluides dépend de la fréquence de fonctionnement et/ou du temps de mise en action, cette part pouvant être appellée "fuites de fonctionnement dynamiques", une autre part des fuites dépendant du jeu entre les pièces mobiles comme indiqué plus haut, cette part, quant à elle, pouvant être qualifiée de "fuites statiques" car sa valeur n'évolue pas en fonction de la fréquence de pilotage.

On sait que la puissance absorbée par un système d'injection de ce type dépend pour une pression donnée de la quantité injectée, des fuites de pilotage et des fuites statiques. On sait également que le dispositif de génération de débit alimentant le système devra être dimensionné de façon à subvenir à tout le débit nécessaire.

On voit donc l'intérêt qu'il y a à réduire les fuites statiques, celles-ci étant une part importante de l'énergie perdue afin de réduire la taille du générateur de fluide sous pression et, par cela, améliorer le bilan énergétique.

La présente invention a pour but de réduire la valeur des fuites dites "statiques".

Comme déjà cités ci-dessus, on connaît les éléments régissant la valeur du débit de fuite.

La pression, elle, est fixée par l'utilisation du système sur un moteur, sa valeur devant être réglée de façon optimale, on ne peut pas intervenir sur cette valeur pour solutionner le problème des fuites.

La viscosité, elle, est également fixée par l'utilisation d'un fluide spécifique.

La température, elle, est difficilement ajustable, le dispositif fonctionnant à proximité d'une source de chaleur importante.

Les dimensions géométriques :
- Le diamètre généralement choisi afin de remplir d'autres conditions fonctionnelles mais habituellement de faible dimension afin de limiter la valeur des masses mobiles.
- La longueur des portées étant un compromis entre les besoins d'étanchéité, de la valeur des masses mobiles et des possibilités d'usinabilité des alésages.
- Le jeu de guidage ou espace entre pointeau et buse étant un compromis entre un coulissement aisé du pointeau, en égard aux faibles forces agissant sur lui et une limitation des fuites.

Tout ceci pouvant être mis sous la forme d'une équation simplifiée comme :

$$F = K \frac{D}{L} E^3$$

F : valeur du débit de fuite
D : diamètre E : espace entre pointeau et buse
K : coefficient
où l'on voit l'importance du paramètre E (jeu) qui agit selon sa troisième puissance, la valeur du jeu étant généralement de quelques millionièmes de mètres.

Il est bien connu de l'homme du métier que le dessin du pointeau et/ou de la buse par exemple en répartissant uniformément le jeu le long de la circonférence du pointeau (par la mise en place de gorge(s) d'équilibrage) permet de réduire quelque peu la valeur du débit de fuite, ces dispositions n'apportant qu'une solution partielle au problème rencontré.

On connaît aussi la solution consistant à placer un joint entre le pointeau et la buse, mais celui-ci de par sa fonction engendre des forces de frottement incompatibles avec l'utilisation du système de commande.

Il est également connu que la pression agissant dans une enceinte provoque une déformation de sa dimension intérieure et dans notre application, la pression allant en décroissant le long des génératrices des parties d'étanchéité provoque un accroissement du diamètre intérieur de la buse de guidage du pointeau imposant alors un jeu réel- de fonctionnement radicalement différent de celui initialement établi, la valeur de cette déformation dépend évidemment des dimensions géométriques de la'buse et partiellement du pointeau.

Une solution à ce problème serait d'augmenter l'épaisseur de la buse mais cela se fait au détriment de l'encombrement et/ou de l'économie de matière.

Le brevet DE-A-2.920.702 décrit un dispositif de guidage d'une pièce mâle dans un alésage, la pièce mâle présentant un passage de fluide sous pression. Ce dispositif ne permet pas de réduire le jeu entre l'alésage et la pièce mâle, et de réduire les débits de fuite entre alésage et pièce mâle. L'alésage n'assure pas l'alimentation du fluide de la pièce mâle.

La présente invention concerne un dispositif de guidage cylindrique comportant une buse ayant un alésage cylindrique assurant le guidage d'un pointeau pouvant se déplacer avec jeu dans l'alésage et comportant un circuit de passage de fluide sous pression, lequel arrive par un canal de la buse.

Selon une caractéristique de l'invention, la buse comporte une capacité alimentée en fluide sous pression, cette capacité entourant sensiblement toute la partie de l'alésage assurant le guidage du pointeau et communicant par le canal avec le jeu, de façon que ladite zone de guidage de l'alésage soit soumise à la différence de pression régnant entre sa surface intérieure et sa surface extérieure dans la capacité et que cette zone de guidage soit déformée par l'action de cette différence de pression réduisant le jeu.

Selon une autre caractéristique de l'invention, le canal débouche au voisinage de la partie médiane de la zone de guidage de l'alésage de la buse.

Selon une autre caractéristique de l'invention, le circuit de passage de fluide sous pression est ménagé sur le pointeau au moyen d'une gorge annulaire et le canal débouche dans le jeu sensiblement au niveau de ladite gorge.

D'autres particularités de l'invention ressortiront de la description suivante de six modes de réalisation préférés, donnés à titres d'exemples non limitatifs, en référence aux dessins annexés dans lesquels :
- la figure 1 représente une vue structurelle et schématique d'un premier mode de réalisation de base,
- la figure 2 représente une courbe de répartition de la pression agissant sur ce dispositif,

- et les figures 3 à 7 représentent des vues schématiques des cinq autres modes de réalisation.

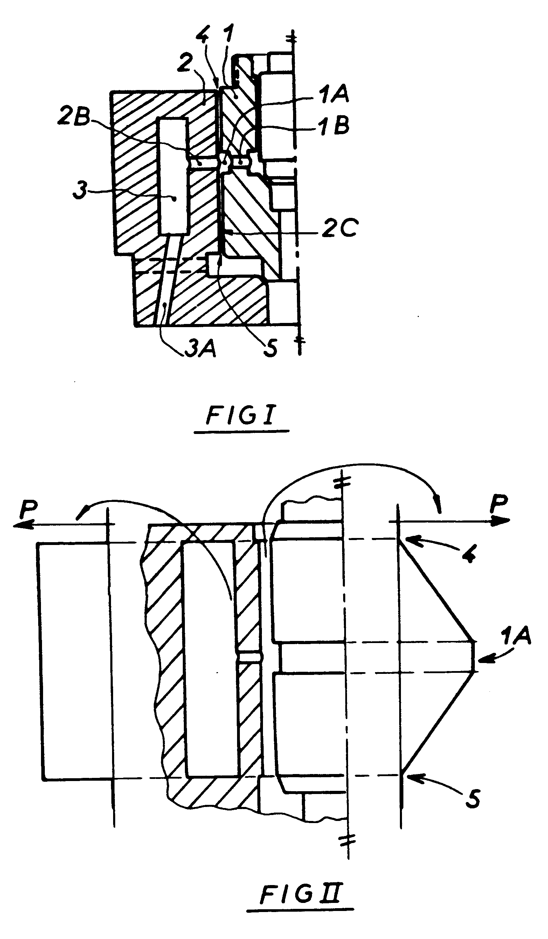

Conformément à l'invention, le dispositif représenté à la figure 1 comprend un pointeau 1 placé dans une buse 2, ce pointeau pouvant se déplacer avec l'aide d'un moyen annexe, non décrit et connu, par ailleurs, et créer ainsi une fonction de commande de débit à l'aide de dispositifs connus dont la description sort du présent sujet, la buse 2 étant agencée de façon qu'une capacité 3 soit créée. Sur le pointeau 1 un circuit de passage 1A de fluide mis en pression est ménagé par exemple au moyen d'une gorge annulaire. Sur la figure 1, le circuit 1A est prolongé par le circuit 1B dans un but non décrit sortant du cadre de l'invention.

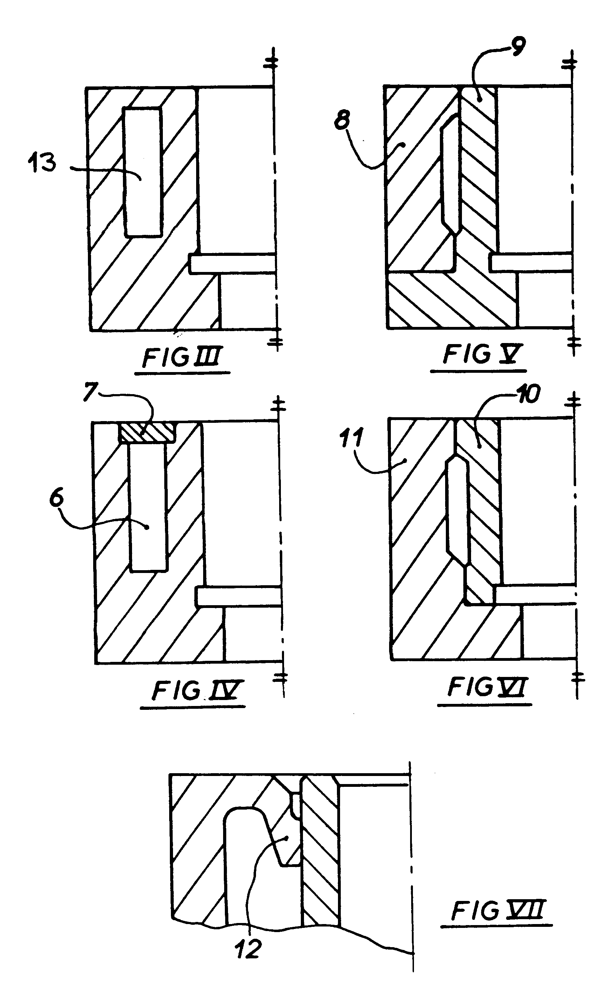

Le fluide sous pression arrivant par le canal 3A emplit la capacité 3, la pression agissant sur la surface cylindrique extérieure de la buse 2 (voir figure 2). La hauteur de cette surface étant délimitée par la hauteur de la capacité 3, la pression agissant également, le fluide étant réparti par la gorge 1A, après avoir emprunté le canal 2B sur la surface interne de la buse 2, un débit de fluide s'établit dans l'espace 2C en partant de la gorge 1A en direction des deux extrémités 4 et 5 du contact entre le pointeau 1 et la buse 2 définissant deux portées d'étanchéité. La pression est évidemment à sa valeur maximale au voisinage de 1A, tandis que sa valeur est minimale aux points 4 et 5, tout ou long de la portée d'étanchéité, la pression s'abaisse progressivement en fonction de la distance par rapport au passage 1A, cette décroissance dépendant, quant à elle, de la valeur de l'espace 2C le long des portées d'étanchéité, par exemple, si l'espace 2C reste constant, la variation de la pression se fait de façon linéaire comme représenté sur la figure 2.

Il est connu que les déformations de ce genre de pièce sont essentiellement dues à la différence de pression régnant entre l'intérieur et l'extérieur de la pièce (équations de LAME).

On voit donc qu'avec ce type de construction où la partie du matériau constituant le guidage se trouve soumise sur son extérieur à une pression constante et sur sa partie intérieure à une pression variant graduellement le long dudit guidage, il s'établit une pression différentielle tout au long de la portée qui a tendance à annuler au point 1A la variation de l'espace 2C ou à le faire diminuer ; donc à annuler, en partie, une variation de jeu initial et, pour l'autre partie, à réduire ce même jeu initial.

Il apparaît ainsi clairement que le dispositif décrit, en réduisant le jeu de fonctionnement en fonction de la pression, limite le débit de fuite statique s'écoulent dans l'espace 2C.

Les figures 3, 4, 5 et 6 montrent respectivement :

- une capacité 13 noyée dans une pièce massive,
- une capacité obtenue par aménagement d'une saignée 6 rebouchée partiellement par un obturateur 7:
- une capacité obtenue par l'adaptation d'une bague femelle 8 sur un corps principal mâle 9 comportant le dismètre de guidage,
- et une capacité obtenue par l'adaptation d'une douille 10 comportant le diamètre de guidage dans un corps principal creux 11.

L'étanchéité de cette capacité est réalisée par soudage ou serrage de parties constitutives et par l'intermédiaire de joints appropriés tels qu'une lèvre métallique 12 précontrainte représentée à la figure 7.

**Revendications**

1. Dispositif de guidage cylindrique comportant une buse (2) ayant un alésage cylindrique assurant le guidage d'un pointeau (1) déplaçable avec jeu dans ledit alésage et comportant un circuit de passage (1A) de fluide sous pression, lequel arrive par un canal (2B) de la buse, la buse comportant une capacité (3) alimentée en fluide sous pression, caractérisé en ce que cette capacité entoure sensiblement toute la partie de l'alésage assurant le guidage du pointeau (1) et communique par le canal (2B) avec le jeu (2C), de façon que ladite zone de guidage de l'alésage soit soumise à la différence de pression régnant entre sa surface intérieure et sa surface extérieure dans la capacité (3) et que cette zone de guidage est déformée par l'action de cette différence de pression réduisant le jeu (2C).

2. Dispositif suivant la revendication 1, caractérisé en ce que le canal (2B) débouche au voisinage de la partie médiane de la zone de guidage de l'alésage de la buse (2).

3. Dispositif selon l'une quelconque des revendications 1 à 2, caractérisé en ce que le circuit de passage (1A) de fluide sous pression est ménagé sur le pointeau (1) au moyen d'une gorge annulaire et en ce que le canal (2B) débouche dans le jeu (2C) sensiblement au niveau de ladite gorge.

4. Dispositif selon l'une quelconque des revendications 1 à 3, caractérisé en ce que la capacité (13) est interne à une pièce massive.

5. Dispositif selon l'une quelconque des revendications 1 à 3, caractérisé en ce que la capacité est obtenue par un aménagement d'une saignée (6) rebouchée partiellement par un obturateur (7).

6. Dispositif selon l'une quelconque des revendications 1 à 3, caractérisé en ce que la capacité est obtenue par l'adaptation d'une bague femelle (8) sur un corps principal mâle (9) comportant le diamètre de guidage.

7. Dispositif selon l'une quelconque des revendications 1 à 3, caractérisé en ce que la capacité est obtenue par l'adaptation d'une douille (10) comportant le diamètre de guidage dans un corps principal creux (11).

8. Dispositif selon l'une quelconque des revendications 5, 6 et 7, caractérisé en ce que la partie ajoutée afin de former la capacité est fixée et étanchée par soudage.

9. Dispositif selon l'une quelconque des revendications 5, 6 et 7, caractérisé en ce que la partie ajoutée afin de former la capacité est étanchée à ses extrémités à l'aide de joints.

10. Dispositif selon l'une quelconque des revendications 5, 6 et 7, caractérisé en ce que la partie ajoutée afin de former la capacité est étanchée par serrage des deux parties.

11. Dispositif selon l'une quelconque des revendications 5, 6 et 7, caractérisé par l'agencement sur chaque endroit à étancher d'une lèvre métallique (12) qui, par une précontrainte initiale et par l'effet de la pression, provoquera une force de contact tellè que l'étanchéité sera assurée.

**Claims**

1. A cylindrical guiding device comprising a nozzle (2) having a cylindrical bore ensuring the guiding of a needle (1) which may move with clearance in the bore and comprising a circuit (1A) for the passage of pressurized fluid which arrives via a channel (2B) of the nozzle, the nozzle comprising a chamber (3) supplied with pressurized fluid, characterized in that this chamber substantially surrounds the whole of the portion of the bore providing for the guiding of the needle (1) and communicates via the channel (2B) with the clearance (2C), so that each guiding zone of the bore is subject to the pressure difference between its inner surface and its outer surface in the chamber (3) and so that this guiding zone is deformed by the action of this pressure difference reducing the clearance (2C).

2.  A device as claimed in claim 1, characterized in that the channel (2B) has its outlet in the vicinity of the median portion of the guiding zone of the bore of the nozzle (2).

3.  A device as claimed in any one of claims 1 and 2, characterized in that the circuit (1A) for the passage of pressurized fluid is provided on the needle (1) by means of an annular groove and in that the channel (2B) has its outlet in the clearance (2C) substantially at the location of this groove.

4.  A device as claimed in one of claims 1 to 3, characterized in that the chamber (3) is inside a solid component.

5.  A device as claimed in any one of claims 1 to 3, characterized in that the chamber is obtained by providing a drain (6) partially closed by an obturator (7).

6.  A device as claimed in any one of claims 1 to 3, characterized in that the chamber is obtained by fitting a female ring (8) on a principal male body (9) comprising the guiding diameter.

7.  A device as claimed in any one of claims 1 to 3, characterized in that the chamber is obtained by providing a socket (10) comprising the guiding diameter in a main hollow body (11).

8.  A device as claimed in any one of claims 5 to 7, characterized in that the portion added to form the chamber is fixed and sealed by welding.

9.  A device as claimed in any one of claims 5 to 7, characterized in that the portion added to form the chamber is sealed at its ends by means of joints.

10. A device as claimed in any one of claims 5 to 7, characterized in that the portion added to form the chamber is sealed by clamping of the two portions.

11. A device as claimed in any one of claims 5 to 7, characterized by the arrangement, on each location to be sealed, of a metal lip (12) which, by initial pre-stressing and the effect of pressure, generates a contact force such that leak-tightness is ensured.

**Patentansprüche**

1.  Zylindrische Führungsvorrichtung, mit einer Düse (2), die eine zylindrische Bohrung aufweist, welche die Führung einer Düsennadel (1) gewährleistet, die mit Spiel in dieser Bohrung verschiebbar ist und mit einer Durchlaßleitung (1A) für ein Fluid unter Druck, das durch einen Düsenkanal (2B) zugeführt wird, wobei die Düse eine mit Fluid unter Druck versorgte Vorratskammer (3) aufweist, dadurch gekennzeichnet, daß diese Vorratskammer im wesentlichen den gesamten Abschnitt der Bohrung umgibt, der die Führung der Düsennadel (1) gewährleistet und mit dem Kanal (2B) mit dem Spiel (2C) derart in Verbindung steht, daß der Führungsbereich der Bohrung der Druckdifferenz unterworfen ist, die zwischen der Innenfläche und der Außenfläche der Vorratskammer (3) herrscht, und daß dieser Führungsbereich durch die Wirkung der das Spiel (2C) verringernden Druckdifferenz verformt wird.

2.  Vorrichtung nach Anspruch 1, dadurch gekennzeichnet, daß der Kanal (2B) in der Nähe des Mittenabschnitts des Führungsbereiches der Bohrung der Düse (2) mündet.

3.  Vorrichtung nach einem der Ansprüche 1 und 2, dadurch gekennzeichnet, daß die Durchlaßleitung (1A) des Fluids unter Druck in der Düsennadel (1) mittels einer ringförmigen Nut verwirklicht ist, und daß der Kanal (2B) im Spiel (2C) im wesentlichen auf Höhe dieser Nut mündet.

4.  Vorrichtung nach einem der Ansprüche 1 bis 3, dadurch gekennzeichnet, daß die Vorratskammer (13) in einem Massivteil ausgebildet ist.

5.  Vorrichtung nach einem der Ansprüche 1 bis 3, dadurch gekennzeichnet, daß die Vorratskammer durch Herstellen einer teilweise durch einen Verschluß (7) verschlossenen Bohrung (6) erhalten wird.

6.  Vorrichtung nach einem der Ansprüche 1 bis 3, dadurch gekennzeichnet, daß die Vorrats-kammer durch Anpassung eines aufnehmen-den Ringes (8) auf ein den Führungsdurchmesser aufweisendes Eingreifteil (9) erhalten wird.

7.  Vorrichtung nach einem der Ansprüche 1 bis 3, dadurch gekennzeichnet, daß die Vorratskammer durch Anpassung einer den Führungsdurchmesser aufweisenden Buchse (10) an ein hohles Hauptteil (11) erhalten wird.

8. Vorrichtung nach einem der Ansprüche 5, 6 und 7, dadurch gekennzeichnet, daß das zur Ausbildung der Vorratskammer hinzugefügte Teil mittels Verschweißung befestigt und abgedichtet wird.

9. Vorrichtung nach einem der Ansprüche 5, 6 und 7, dadurch gekennzeichnet, daß das zur Ausbildung der Vorratskammer hinzugefügte Teil an seinen Enden mittels Dichtungen abgedichtet wird.

10. Vorrichtung nach einem der Ansprüche 5, 6 und 7, dadurch gekennzeichnet, daß das zur Ausbildung der Vorratskammer hinzugefügte Teil durch Klemmung der beiden Abschnitte abgedichtet wird.

11. Vorrichtung nach einem der Ansprüche 5, 6 und 7, dadurch gekennzeichnet, daß an jeder abzudichtenden Stelle eine Metall-Lippe (12) vorgesehen ist, die durch ursprüngliche Vorspannung und durch Druckeinwirkung eine derartige Kontaktkraft bewirkt, daß die Abdichtung gewährleistet ist.

_FIG I_

_FIG II_

EP 0 319 371 B1

FIG III

FIG V

FIG IV

FIG VI

FIG VII